Europäisches Patentamt

**European Patent Office**

Office européen des brevets

(11) Numéro de publication: **0 085 792**
**A1**

(12) # DEMANDE DE BREVET EUROPEEN

(21) Numéro de dépôt: **82201557.4**

(22) Date de dépôt: **08.12.82**

(51) Int. Cl.³: **A 01 K 87/00**
**A 01 K 87/04**

(30) Priorité: **08.02.82 BE 2059569**

(43) Date de publication de la demande:
**17.08.83 Bulletin 83/33**

(84) Etats contractants désignés:
**AT CH DE FR GB IT LI LU NL SE**

(71) Demandeur: **FABRIQUE NATIONALE HERSTAL en abrégé FN, société anonyme**

**B-4400 Herstal(BE)**

(72) Inventeur: **Seccini, Bernard**
**2123 Résidence des Cithaux Saint Maur**
**F-59800 Lille(FR)**

(72) Inventeur: **Gosset, François Joseph**
**rue Celestin Demblon 99**
**B-4400 Herstal(BE)**

(74) Mandataire: **Bockstael, Daniel**
**M.F.J. Bockstael Arenbergstraat 13**
**B-2000 Anvers(BE)**

(54) **Canne à pêche télescopique.**

(57) Chaque élément est de forme tronconique, le plus grand diamètre d'un élément étant supérieur au plus petit diamètre de l'élément précédent, dans le sens de la conicité, l'extrémité de plus faible diamètre de chaque élément, sauf le plus mince, étant entourée d'un fourreau (9) amovible dont une partie (10) s'étend au-delà de l'élément considéré, la surface extérieure de la partie (8) du fourreau (9) entourant ladite extrémité et la surface interne de sa partie dépassante étant toutes deux coniques, leur conicité étant opposée à celle desdits éléments.

Fig. 2

1

## "Canne à pêche télescopique"

La présente invention concerne une canne à pêche télescopique du type constitué par une pluralité d'éléments tubulaires mutuellement emboîtés et comportant des moyens permettant le blocage desdits éléments dans chacune de leurs deux positions extrêmes, c'est-à-dire dans les positions d'extension et de rétraction maximales.

Différentes exécutions de cannes de ce type on déjà été proposées. A des degrés divers, elles présentent toutes des inconvénients : manque de nervosité, poids, montage et démontage peu commodes, vulnérabilité aux corps étrangers tels que, par exemple, la terre et le sable, esthétique discutable, etc...

Le but de l'invention est de fournir une canne à pêche du type considéré, ne présentant aucun des désavantages susmentionnés.

A cet effet, l'invention propose une canne du type envisagé, remarquable en ce que chaque élément est de forme tronconique, le plus grand diamètre d'un élément étant supérieur au plus petit diamètre de l'élément précédent, dans le sens de la conicité, l'extrémité de plus faible diamètre de chaque élément, sauf le plus mince, étant entourée d'un fourreau amovible dont une partie s'étend au-delà de l'élément considéré, la surface extérieure de la partie du fourreau entourant ladite extrémité et la surface interne de sa partie dépassante étant toutes deux coniques, leur conicité étant opposée à celle desdits éléments.

Pour plus de clarté, un exemple de mise en oeuvre de l'invention est décrit ci-après à titre illustratif et non restrictif, référence étant faite aux dessins annexés, dans lesquels :

la figure 1 représente de façon schématique une canne selon l'invention, en position d'extension;
la figure 2 est une coupe axiale à échelle agrandie de la partie indiquée en F2 à la figure 1;
la figure 3 est une coupe axiale de la partie indiquée en F3 à la figure 1;
la figure 4 montre, en coupe axiale, les extrémités de plus faible diamètre d'une série d'éléments en position rétractée; et
la figure 5 est le pendant de la figure 4, montrant les extrémités de plus grand diamètre desdits éléments.

Au sujet des dessins, il faut d'abord insister particulièrement sur le fait que l'échelle adoptée ne permet pas de respecter scrupuleusement la réalité. Ces dessins devront donc être interprêtés en faisant appel au texte.

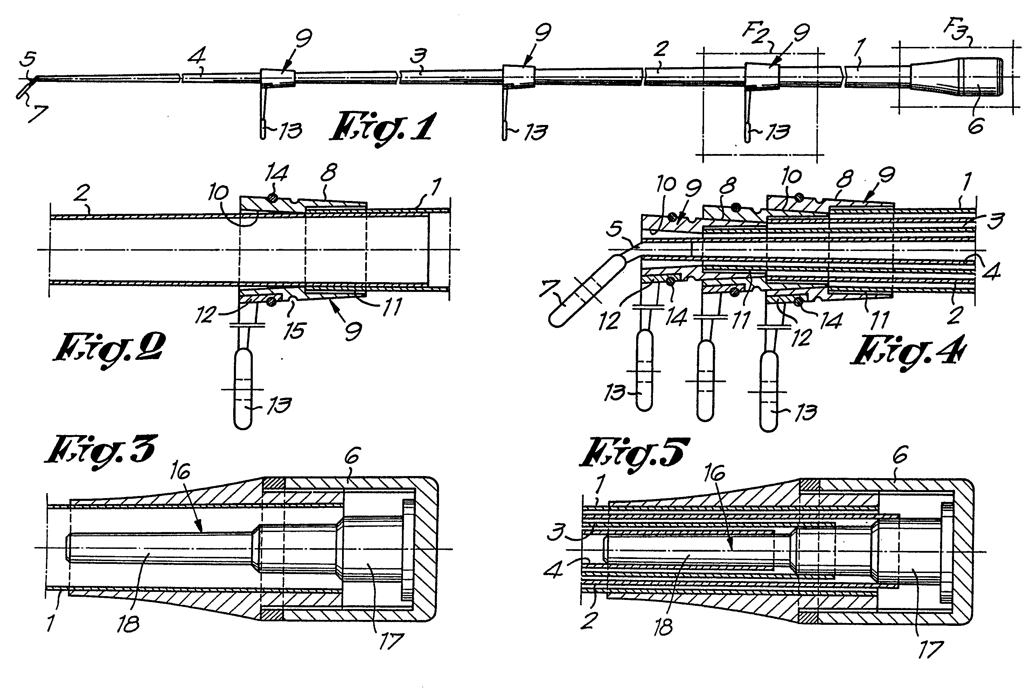

La canne représentée est constituée par une pluralité d'éléments tubulaires tronconiques, en l'occurrence 1 à 4, mutuellement emboîtés. Pour la facilité de l'exposé, les termes "arrière" et "avant", tels qu'utilisés ci-après, se référeront au sens, respectivement, gauche droite et droite gauche de la figure 1.

Ainsi, l'arrière du tube 1 est obturée par un bouchon amovible 6, tandis que le tube 4 constitue le scion terminé en sa partie avant 5 par un oeillet guide-fil 7.

Les éléments 1-4 sont préférablement réalisés, chacun, en polyester renforcé à la fibre de verre ou similaire.

Le diamètre de l'extrémité arrière d'un élément est supérieur au diamètre de l'extrémité avant du tube précédent, dans le sens arrière-avant, de sorte à assurer un serrage-cône en position d'extension maximum.

L'extrémité avant de chaque élément, sauf l'élément scion 4, est entourée par une partie 8 d'un fourreau amovible 9, dont une partie 10 s'étend au-delà de ladite extrémité.

La surface externe de la partie 8 est conique, ainsi que la surface interne de la partie 10 et cette conicité est opposée à celle des éléments.

L'alésage cylindrique de la partie 8 est pourvu d'un filetage destiné à coopérer avec un filetage correspondant d'une bague 11 solidarisée à l'élément considéré, par exemple par collage.

La partie 10 comporte un logement destiné à recevoir le pied 12 d'un guide-fil 13, ce pied étant maintenu dans son logement à l'aide d'un cir-clip 14 partiellement engagé dans une gorge prévue à cet effet dans la partie 10 ainsi que dans ledit pied 12.

Une gorge similaire 15 est prévue dans la partie 8. Elle est destinée à recevoir le cir-clip 14 lors du démontage du guide-fil 13, afin d'éviter sa perte.

Le bouchon 6 est pourvu d'une carotte axiale 16 comportant au moins deux sections coniques, l'une - 17 - correspondant à l'alésage de la partie arrière de l'élément 2 et l'autre - 18 -à celui de la partie arrière de l'élément scion 4. Des sections intermédiaires peuvent être prévues pour d'autres éléments.

Il est clair qu'en position d'extension, le blocage mutuel de deux éléments successifs est assuré par l'engagement à frottement de la surface externe arrière de l'un avec la surface interne de l'extrémité avant de l'autre. En position rétractée, le blocage est assuré par l'engagement à frottement de la surface 8 d'un fourreau 9 avec la surface interne 10 de l'autre fourreau.

L'élément scion est maintenu, la canne étant entièrement rétractée, par engagement de sa partie arrière autour de la section 18 de la carotte 16.

Pour le démontage complet de la canne, il suffit de dévisser et d'écarter les fourreaux 9 ainsi que le bouchon 16 et d'extraire les éléments 2-4 l'un de l'autre dans le sens avant-arrière.

Il est évident que de nombreuses modifications peuvent être apportées à l'exemple susdécrit sans, pour autant, sortir du cadre de l'invention.

Revendications.

1.- Canne à pêche télescopique du type constitué par une pluralité d'éléments tubulaires mutuellement emboîtés (1-4) et comportant des moyens permettant le blocage desdits éléments (1-4) dans chacune de leurs deux positions extrêmes, chaque élément (1-4) étant de forme tronconique, le plus grand diamètre d'un élément étant supérieur au plus petit diamètre de l'élément précédent, dans le sens de la conicité, l'extrémité de plus faible diamètre de chaque élément, sauf le plus mince, étant entourée d'un fourreau (9) caractérisée en ce qu'une partie (10) dudit fourreau (9) s'étend au-delà de l'élément considéré, la surface extérieure de la partie (8) du fourreau (9) entourant ladite extrémité et la surface interne de sa partie dépassante (10) étant toutes deux coniques, leur conicité étant opposée à celle desdits éléments.

2.- Canne à pêche selon la revendication 1, caractérisée en ce que l'alésage de la partie (8) du fourreau entourant ladite extrémité est pourvu d'un filetage destiné à coopérer avec un filetage prévu sur une bague (11) solidarisée en permanence à ladite extrémité.

3.- Canne à pêche selon la revendication 1, caractérisée en ce que la surface externe de la partie dépassante (10) du fourreau (9) est pourvue d'un logement destiné à recevoir le pied (12) d'un guide-fil (13), le maintien de ce pied dans ledit logement étant assuré par un cir-clip (14).

4.- Canne à pêche selon la revendication 1, caractérisée en ce que l'extrémité libre de l'élément de plus grand diamètre (1) est obturée par un bouchon amovible (6) muni d'une carotte axiale (16) présentant deux sections coniques (17-18) correspondant, respectivement, à l'alésage de la partie arrière de l'élément suivant (2) et l'autre à celle du dernier élément ou élément le plus mince (4).

Fig.1

Fig.2

Fig.3

Fig.4

Fig.5

0085792

1/1

**RAPPORT DE RECHERCHE EUROPEENNE**

Office européen
des brevets

0085792
Numéro de la demande

EP 82 20 1557

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 565 620 (LABORATOIRE D'ETUDES ET DE RECHERCHES CHIMIQUES) <br> * En entier * | 1 | A 01 K 87/00 <br> A 01 K 87/04 |
| A | FR-A-2 102 702 (DUPONT) <br> * En entier * | 1 | |
| A | FR-A-1 554 702 (MARGOU ET FILS S.A.) <br> * En entier * | 4 | |
| A | FR-A-2 439 549 (FUJI KOGYO CO., LTD) | | |
| A | FR-A-2 380 727 (ETABL. P. KAUFFMANN ET CIE) | | |

DOMAINES TECHNIQUES
RECHERCHES (Int. Cl. ³)

A 01 K

Le présent rapport de recherche a été établi pour toutes les revendications

| Lieu de la recherche <br> LA HAYE | Date d'achèvement de la recherche <br> 06-04-1983 | Examinateur <br> VERDOODT S.J.M. |
|---|---|---|